# FASCICULE DE BREVET EUROPEEN

(11) **EP 1 032 925 B1**
(45) Date de publication et mention de la délivrance du brevet: **29.08.2001**
(21) Numéro de dépôt: 98955657.6
(22) Date de dépôt: 16.11.1998
(51) Int. Cl.: G07F 7/10, G06K 7/06

(54) **PROCEDE, CARTE A PUCE ET TERMINAUX POUR EFFECTUER DES TRANSACTIONS A TRAVERS UN RESEAU DE TELECOMMUNICATION**
VERFAHREN, CHIPKARTE UND ENDGERÄTE ZUM DURCHFÜHREN VON TRANSAKTIONEN ÜBER EIN TELEKOMMUNIKATIONSNETZWERK
METHOD, CARD AND TERMINALS FOR CARRYING OUT TRANSACTIONS IN A TELECOMMUNICATION NETWORK

(30) Priorité: 20.11.1997 FR 9714578
(43) Date de publication de la demande: 06.09.2000
(73) Titulaire: GEMPLUS, 13881 Gémenos Cédex (FR)
(72) Inventeur: BEAUJARD, Olivier, F-92200 Neuilly (FR); IMBERT, Patrick, F-13011 Marseille (FR)
(86) Numéro de dépôt international: FR9802431
(87) Numéro de publication internationale: WO9927505

(56) Documents cités:
- EP-A- 0 355 372
- WO-A-96/25828
- WO-A-97/05729
- DE-U- 29 520 925
- FR-A- 2 729 523
- GB-A- 2 269 512
- US-A- 5 227 615

## Description

L'invention concerne un procédé pour effectuer des transactions à travers un réseau de télécommunications au moyen de cartes à puce et de terminaux de télécommunication.

Elle concerne également les cartes à puce et les terminaux permettant de mettre en oeuvre le procédé.

Elle trouve de nombreuses applications dans les transactions monétaires, le porte-monnaie électronique, les transactions relatives à la santé, aux jeux.

Les réseaux de télécommunications concernés sont tous les réseaux susceptibles d'être empruntés par un abonné du téléphone pour accéder à un autre abonné ou à des services.

Parmi ces réseaux on peut citer les réseaux de téléphonie, réseau commuté ou réseau à intégration de services et le réseau de téléphonie cellulaire.

La nouvelle génération de terminaux de télécommunication prévoit que ces terminaux soient équipés de deux interfaces de lecture de cartes à puce, l'une pour communiquer avec une carte à puce d'identification d'abonné dédiée à la téléphonie telles que par exemple les cartes SIM (Subscriber Identity Module) dans le cas du système de télécommunication cellulaire et l'autre pour une carte à puce (carte applicative) dédiée à une ou plusieurs applications autres que la téléphonie. Il pourra s'agir par exemple d'une carte porte-monnaie électronique (Voir DE-U-295 20 925).

Les carte à puce dédiées à une ou plusieurs applications autres que la téléphonie peuvent être délivrées par des opérateurs complètement indépendants et la communication avec ces cartes applicatives est établie selon des protocoles distincts.

Il s'avère nécessaire par conséquent que cette nouvelle génération de terminaux de télécommunication supporte les jeux de commandes applicatifs de ces différents types de cartes applicatives (par exemple application bancaire, application fidélité).

Ceci est très contraignant pour les prestataires de services qui doivent de ce fait se lier à un fabricant de terminaux pour proposer leur applications à leurs clients.

De plus cela impose une limitation dans le choix des cartes applicatives utilisables avec un terminal de télécommunication donné, à celles qui auront été prévues initialement sous peine d'avoir à modifier les logiciels du terminal.

La présente invention permet de remédier à ces problèmes.

L'invention a comme premier objectif de ne pas alourdir les interfaces logiques de communication du terminal tout en lui permettant d'accepter n'importe quelle carte applicative et ceci en introduisant des moyens de communication à toute carte d'identification d'abonné dédiée à la téléphonie pour lui permettre de piloter toute carte applicative à travers le terminal de télécommunication.

L'invention a plus particulièrement pour objet un procédé pour effectuer des transactions à travers un réseau de télécommunication au moyen de cartes à puce et de terminaux de télécommunication d'accès au réseau munis d'au moins deux interfaces de lecture de cartes à puce, l'une pour recevoir une carte à puce d'identification d'abonné dédiée à la téléphonie, l'autre pour recevoir une carte à puce additionnelle dédiée à une ou plusieurs applications autres que la téléphonie; caractérisé en ce que la carte à puce d'identification d'abonné communique avec la carte additionnelle via le terminal, au moyen d'un jeu de commandes destinées à piloter ladite carte additionnelle, ces commandes étant pré-formatées par la carte d'identification d'abonné selon le format du protocole de communication de la carte additionnelle et transmises par le terminal selon le protocole de transport de ce dernier.

L'invention a également pour objet une carte à puce téléphonique d'identification d'abonné, caractérisé en ce qu'elle comporte des moyens de communication avec une carte additionnelle dédiée à une ou plusieurs applications autres que la téléphonie, via un terminal de télécommunication muni d'au moins deux interfaces de lecture de cartes à puce, l'une pour recevoir la carte à puce d'identification d'abonné dédiée à la téléphonie et l'autre pour recevoir la carte à puce additionnelle, ces moyens comprenant un jeu de commandes destinées à piloter la carte additionnelle, ledites commandes étant pré-formatées par la carte d'identification d'abonné selon le format (APDU) du protocole de communication de la carte additionnelle et transmises par le terminal selon le protocole de transport de ce dernier.

L'invention a aussi pour objet un terminal de télécommunication d'accès au réseau muni d'au moins deux interfaces de lecture de cartes à puce, l'une pour recevoir une carte à puce d'identification d'abonné dédiée à la téléphonie, l'autre pour recevoir une carte à puce additionnelle dédiée à une ou plusieurs applications autres que la téléphonie, caractérisé en ce qu'il comporte:
- des moyens adaptés pour recevoir des commandes émises par la carte d'identification d'abonné selon le protocole de transport dudit terminal et destinées à piloter la carte additionnelle, ledites commandes étant pré-formatées par la carte d'identification d'abonné selon le format du protocole de communication de la carte additionnelle,
- des moyens pour transmettre parmi ces commandes les commandes "envoie commande entrante/sortante carte 2" à la carte additionnelle telles que pré-formatées,
- des moyens pour exécuter parmi ces commandes les commandes "allume/éteint carte 2",
- des moyens pour émettre une commande "carte 2 présente" à la carte d'identification d'abonné.

D'autres particularités et avantages de l'invention apparaîtront à la lecture de la description qui est faite ci-après et qui est donnée à titre d'exemple illustratif et non limitatif en regard des figures sur lesquelles :
- la figure 1, représente schématiquement une vue globale d'un réseau de télécommunication pour la mise en oeuvre du procédé de l'invention,
- la figure 2, représente de manière plus détaillé de façon schématique, une carte d'identification d'abonné et une carte additionnelle.
- la figure 3, illustre de façon détaillée les échanges entre les différents éléments du système dans le cas d'une commande entrante ou sortante conformément au procédé.
- la figure 4, illustre de façon plus générale les échanges entre les différents éléments pour toutes les commandes.

Comme cela a été dit, le principe de l'invention s'applique à tout type de réseau de téléphonie, réseau téléphonie commuté, RNIS, cellulaire (GSM). Mais la description qui va suivre est donnée pour un réseau de télécommunication cellulaire dont les terminaux sont des radio-téléphones mobiles.

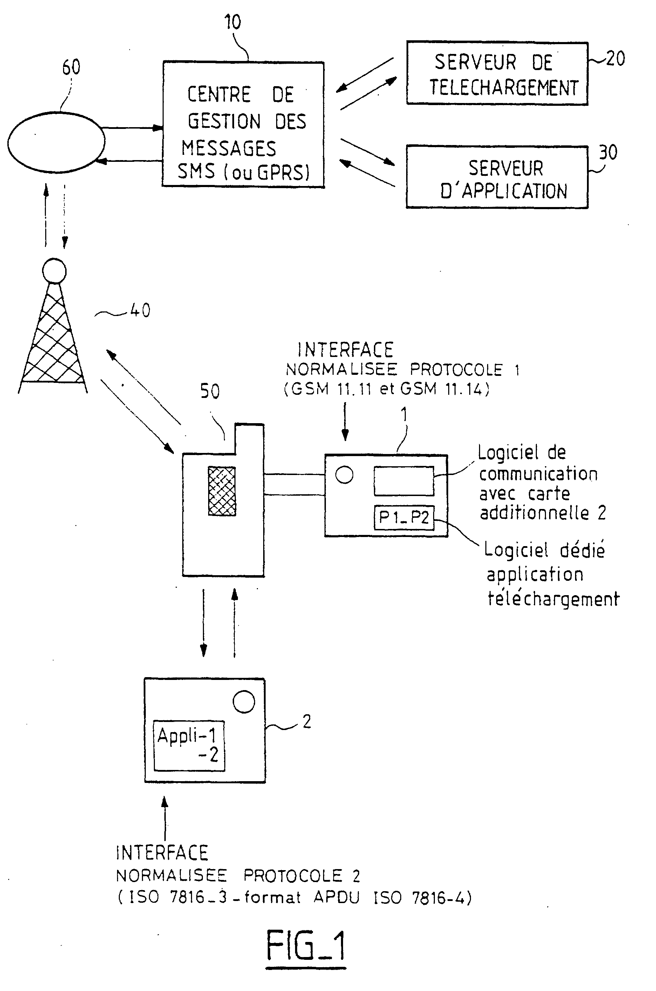

Selon cet exemple illustré par la figure 1 le système comporte :
- un centre de gestion 10 des messages SMS (Short Message Service Center) ou GPRS (Global Packet Radio Service);
- un serveur 20 de téléchargement contenant les programmes dédiés à la mise en oeuvre d'applications,
- un serveur d'application 30 : porte monnaie électronique, banque, points de fidélité donnés par un commerçant;
- un réseau GSM 60 contenant au moins une borne cellulaire 40. Chaque borne permet à l'utilisateur d'être connecté au réseau de l'opérateur;
- un téléphone mobile 50 de l'utilisateur. Un téléphone mobile est composé d'une antenne de réception, d'une batterie, d'un écran de visualisation, d'un clavier, d'une ou plusieurs interfaces cartes, d'un microprocesseur contenant un logiciel système.

Dans la présente invention, le téléphone mobile est muni de deux interfaces carte à puce.
- une carte d'identification d'abonné 1 dénommée carte SIM. Cette carte est présente dans le téléphone mobile de l'utilisateur et lui permet d'être identifié par l'opérateur de téléphonie cellulaire.
- une carte additionnelle 2 dite carte applicative car elle est destinée à des applications d'un type autre que l'application de la carte SIM. Ces applications peuvent être des applications porte monnaie électronique, banque, points de fidélité.

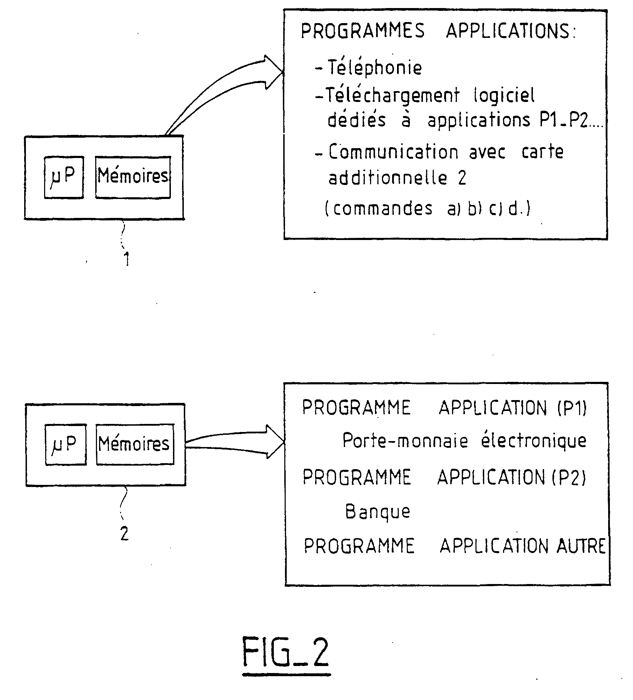

La figure 2 représente les éléments contenus dans la carte SIM 1 et dans la carte additionnelle 2 afin de mettre en oeuvre l'invention.

La carte SIM 1 comporte un microprocesseur, une mémoire morte (ROM), d'une mémoire vive (RAM) et d'une mémoire de type EEPROM. La mémoire morte (ROM) et la mémoire EEPROM contiennent des logiciels et des données permettant le fonctionnement de la carte SIM. Il s'agit notamment d'un logiciel système et d'un ou plusieurs programmes P1-P2 téléchargés, dédiés à la mise en oeuvre d'applications par la carte additionnelle. Chaque programme dédié à la mise en oeuvre d'application comporte une ou plusieurs applications pour la carte additionnelle. Ces applications correspondent à la gestion de l'interface homme machine avec l'utilisateur, à la gestion de la communication avec la carte additionnelle et la gestion de la communication avec le serveur d'application 30 lié à la carte additionnelle.

Le logiciel de communication de la carte SIM utilise le jeu de commandes que possède la carte SIM pour dialoguer avec la carte additionnelle 2 à travers le terminal.

Ce jeu de commande comporte des commandes pré-formatées selon le format APDU (ISO 7816-4) qui est le format du protocole de communication de la carte 2. Ces commandes sont encapsulées par la carte SIM suivant le protocole de transport GSM 11.14 et transmises suivant ce protocole par le terminal (les commandes émises par la carte SIM sont lues par le terminal).

Plus précisément la carte SIM 1 dispose des quatre commandes suivantes :
a) - "allume carte 2"
b) - "éteint carte 2"
c) - "envoi commande entrante dans la carte 2"
d) - "envoi commande sortante dans la carte 2"

Les deux premières a), b), sont exécutées par le terminal, les deux autres c) et d) sont communiquées au format APDU à la carte 2.

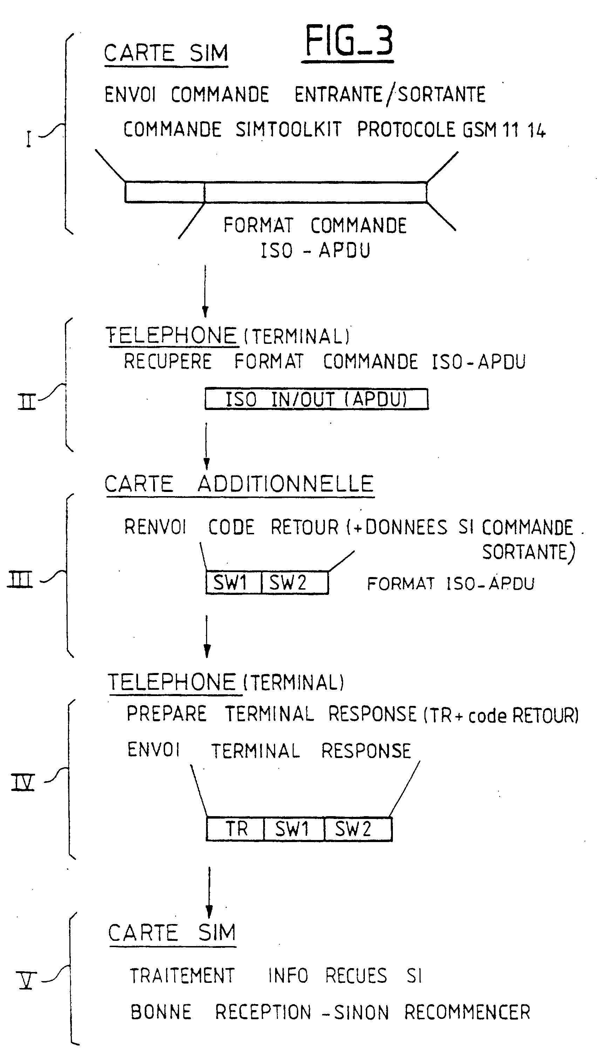

Un schéma illustrant de façon plus détaillée les différents échanges est illustré dans la suite à propos de la figure 3.

La carte additionnelle 2, (carte applicative) est composée d'un microprocesseur, d'une mémoire morte (ROM), d'une mémoire vive (RAM) et d'une mémoire de type EEPROM. La mémoire morte (ROM et la mémoire EEPROM contiennent des logiciels et des données permettant le fonctionnement de cette carte applicative, notamment un logiciel système et des logiciels applicatifs ( par exemple un logiciel de porte-monnaie électronique, et/ou un logiciel de gestion de points de fidélité...).

Le terminal qui est un téléphone mobile selon cet exemple permet l'insertion de 2 cartes. Pour cela il comporte deux interfaces de lecture de carte à puce. La première interface permet l'insertion de la carte SIM identifiant l'utilisateur du téléphone sur le réseau auquel il est connecté. La ou les interfaces cartes supplémentaires permettent à l'utilisateur d'insérer des cartes d'un autre type (carte bancaire, carte de fidélité, carte santé, ...).

Le terminal comporte en outre des éléments non représentés tel qu'un microprocesseur et une mémoire de programme contenant un logiciel système et un logiciel communication.

Ce logiciel communication est apte selon l'invention à recevoir les commandes émises par la carte SIM.

Ce logiciel permet en outre, de transmettre à la carte 2 les commandes entrante/sortante carte 2 telles que pré-formatées c'est à dire de les transmettre au format APDU, d'exécuter les commandes allume/éteint carte 2 et d'émettre une commande "carte 2 présente" à la carte SIM dès que le téléphone mobile a détecté la présence d'une carte 2 dans son lecteur. La détection peut être mécanique ou électrique. Cette commande est envoyée à la carte SIM selon le protocole de communication GSM 11.14.

On va maintenant détailler le dialogue entre les éléments du système à partir du schéma de la figure 3 dans le cas d'une commande entrante ou sortante émise par la carte SIM pour la carte additionnelle 2. Une commande entrante est typiquement une commande d'écriture donnée à la carte 2, cette commande est accompagnée des données à écrire.

Une commande sortante est typiquement une commande de lecture donnée à la carte 2.
. à l'étape I, la carte SIM encapsule la commande de format APDU (ISO-7816-4) dans une commande SIM TOOLKIT de la norme GSM 11.14,
. à l'étape II, le terminal récupère la commande APDU et la communique à la carte additionnelle 2,
. à l'étape III, la carte additionnelle 2 renvoie au terminal un code retour SW1/SW2 au format APDU. Ce code est assorti de données dans le cas d'une commande sortante,
. à l'étape IV, le terminal prépare le "Terminal Response" TR et envoie à la carte SIM la réponse avec le code retour,
. à l'étape V, la carte SIM traite la réponse dans le cas d'une bonne réception sinon recommence à partir de l'étape I.

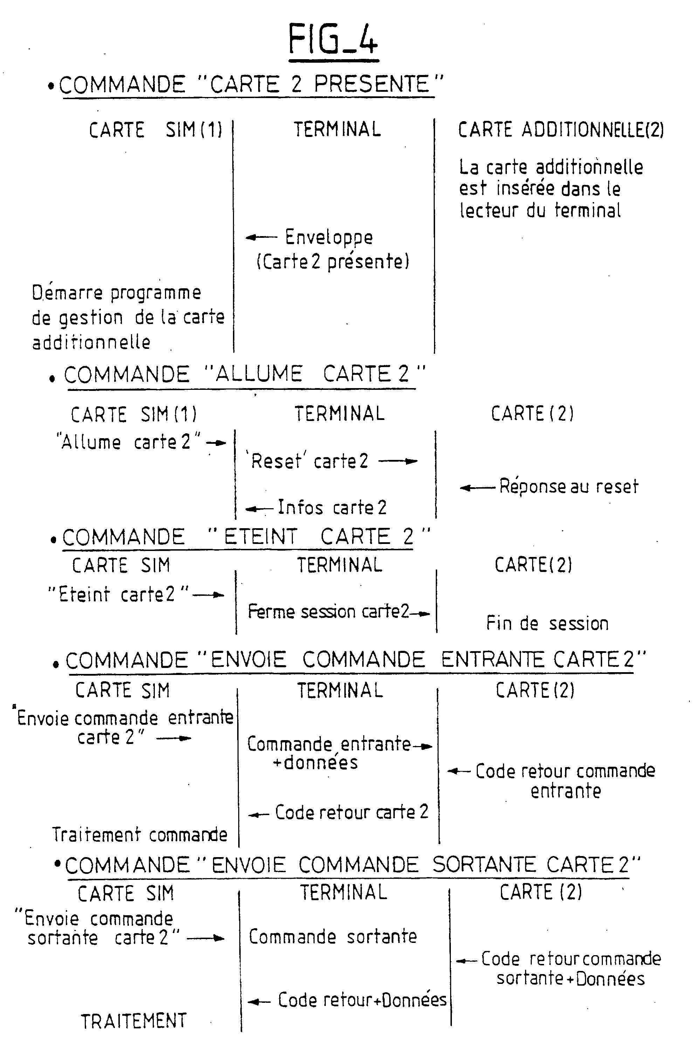

La figure 4 illustre les commandes essentielles utilisées pour établir un dialogue entre la carte SIM et la carte additionnelle - carte 2 - à travers le terminal.

La commande "carte 2 présente" est émise par le terminal. Les quatre autres commandes sont émises par la carte SIM pour le terminal qui vient les lire. La commande "Allume Carte 2" est exécutée par le terminal et se traduit par une ordre RESET envoyé à la carte 2. La commande "Eteint carte 2" est exécutée par le terminal, qui pour cela n'alimente plus en courant la carte 2.

Les commandes Entrante/Sortante carte 2 ont déjà été détaillées à partir du schéma de la figure 3.

## Revendications

1. Procédé pour effectuer des transactions à travers un réseau de télécommunication (60) au moyen de cartes à puce (1,2) et de terminaux de télécommunication (50) d'accès au réseau munis d'au moins deux interfaces de lecture de cartes à puce, l'une pour recevoir une carte à puce d'identification d'abonné (1) dédiée à la téléphonie, l'autre pour recevoir une carte à puce additionnelle (2) dédiée à une ou plusieurs applications autres que la téléphonie; **caractérisé en ce que** la carte à puce d'identification d'abonné communique avec la carte additionnelle via le terminal, au moyen d'un jeu de commandes destinées à piloter ladite carte additionnelle, ces commandes étant pré-formatées par la carte d'identification d'abonné selon le format du protocole de communication de la carte additionnelle et transmises par le terminal selon le protocole de transport de ce dernier.

2. Procédé pour effectuer des transactions selon la revendication 1, **caractérisé en ce que** le jeu de commandes comporte au moins les commandes suivantes:
- mise sous tension de la carte additionnelle "allume carte 2",
- mise hors tension de la carte additionnelle "éteint carte 2",
- envoi de données dans carte additionnelle "Envoie commande entrante dans carte 2",
- réception de données de la carte additionnelle "Envoie commande sortante dans carte 2".

3. Procédé selon la revendication 1 ou 2, **caractérisé en ce que** la communication avec la carte additionnelle (2) via le terminal comporte une commande supplémentaire envoyée par le terminal à la carte d'identification d'abonné selon le protocole de communication de celle-ci, cette commande étant :
- présence de la carte additionnelle "carte 2 présente".

4. Procédé selon l'une quelconque des revendications précédentes, **caractérisé en ce que** la communication avec la carte additionnelle (2) via le terminal est mise en oeuvre par un programme chargé dans une mémoire de programme de la carte d'identification d'abonné.

5. Procédé selon l'une quelconque des revendications précédentes, **caractérisé en ce que** la carte d'identification d'abonné (1) est apte à piloter le téléchargement à travers le terminal, dans sa propre mémoire de programme, d'un ou plusieurs programmes dédiés à la mise en oeuvre d'applications pour la carte additionnelle (2), ces programmes dédiés provenant d'un serveur de téléchargement d'applications accessible par les terminaux au moyen du réseau de télécommunication.

6. Procédé selon l'une quelconque des revendications précédentes, **caractérisé en ce que** le réseau téléphonique (60) est le réseau de radio téléphonie mobile (GSM), les terminaux étant des radio téléphones et les cartes d'identification d'abonné étant des cartes SIM.

7. Procédé selon l'une quelconque des revendications 1 à 4, **caractérisé en ce que** le réseau téléphonique est le réseau commuté de téléphonie ou le réseau à intégration de service (RNIS).

8. Carte à puce téléphonique d'identification d'abonné, **caractérisé en ce qu**'elle comporte des moyens de communication avec une carte additionnelle (2) dédiée à une ou plusieurs applications autres que la téléphonie, via un terminal de télécommunication (50) muni d'au moins deux interfaces de lecture de cartes à puce, l'une pour recevoir la carte à puce d'identification d'abonné dédiée à la téléphonie et l'autre pour recevoir la carte à puce additionnelle, ces moyens comprenant un jeu de commandes destinées à piloter la carte additionnelle (2), ledites commandes étant pré-formatées par la carte d'identification d'abonné selon le format (APDU) du protocole de communication de la carte additionnelle et transmises par le terminal selon le protocole de transport de ce dernier.

9. Carte à puce téléphonique d'identification d'abonné selon la revendication 8, **caractérisé en ce qu**'elle comporte une mémoire de programme comportant un programme adapté pour piloter le téléchargement à travers le terminal (50), dans cette mémoire, d'un ou plusieurs programmes dédiés à la mise en oeuvre d' applications pour la carte additionnelle (2), ces programmes provenant d'un serveur de téléchargement (20), accessible par les terminaux au moyen du réseau de télécommunication (60).

10. Carte à puce téléphonique d'identification d'abonné selon la revendication 9, **caractérisé en ce que** les programmes dédiés téléchargés dans la carte d'identification d'abonné (1) comportent une ou plusieurs applications pour la carte additionnelle (2), ces applications correspondant à la gestion de l'interface homme machine avec l'utilisateur, la gestion de la communication avec ladite carte additionnelle et la gestion de la communication avec le serveur d'application (30) lié à la carte additionnelle.

11. Terminal de télécommunication d'accès au réseau muni d'au moins deux interfaces de lecture de cartes à puce, l'une pour recevoir une carte à puce d'identification d'abonné (1) dédiée à la téléphonie, l'autre pour recevoir une carte à puce additionnelle (2) dédiée à une ou plusieurs applications autres que la téléphonie, **caractérisé en ce qu**'il comporte:
- des moyens adaptés pour recevoir des commandes émises par la carte d'identification d'abonné selon le protocole de transport dudit terminal et destinées à piloter la carte additionnelle, ledites commandes étant pré-formatées par la carte d'identification d'abonné selon le format (APDU) du protocole de communication de la carte additionnelle,
- des moyens pour transmettre parmi ces commandes les commandes "envoie commande entrante/sortante carte 2" à la carte additionnelle telles que pré-formatées,
- des moyens pour exécuter parmi ces commandes les commandes "allume/éteint carte 2",
- des moyens pour émettre une commande "carte 2 présente" à la carte d'identification d'abonné.

12. Terminal de télécommunication selon la revendication 11, **caractérisé en ce que** les commandes émises par la carte d'identification d'abonné (1) sont encapsulées selon le protocole de transport du terminal de télécommunication, le terminal étant apte à récupérer les données pré-formatées ainsi reçues pour les transmettre à la carte additionnelle selon son protocole de communication.

13. Terminal de téléphonie selon la revendication 10, **caractérisé en ce que** le protocole de transport entre le terminal et la carte d'identification d'abonné est définie par la norme GSM 11.14 et en ce que le protocole de communication avec la carte additionnelle suit le format APDU (ISO 7816-4).

## Patentansprüche

1. Verfahren zur Durchführung von Transaktionen über ein Telekommunikationsnetz (60) anhand von Chipkarten (1, 2) und Telekommunikationsterminals (50) für den Zugriff auf das Netz, die mindestens zwei Interfaces für das Lesen von Chipkarten aufweisen, eins für die Aufnahme einer Teilnehmeridentifikations-Chipkarte (1) für die Telephonie, das andere für die Aufnahme einer zusätzlichen Chipkarte (2) für eine oder mehrere andere Applikationen als die Telephonie, **dadurch gekennzeichnet**, dass die Teilnehmeridentifikätions-Chipkarte mit der zusätzlichen Karte über das Terminal kommuniziert, und zwar mittels eines Befehlssatzes zur Steuerung der besagten zusätzlichen Karte, wobei diese Befehle durch die Teilnehmeridentifikationskarte gemäss dem Format des Kommunikationsprotokolls der zusätzlichen Karte vorformatiert sind und vom Terminal gemäss dem Transportprotokoll desselben übertragen werden.

2. Verfahren zur Durchführung von Transaktionen nach Anspruch 1, **dadurch gekennzeichnet**, dass der Befehlssatz zumindest die folgenden Befehle umfasst:
- Unterspannungssetzung der zusätzlichen Karte "Karte 2 Ein",
- Außerspannungssetzung der zusätzlichen Karte "Karte 2 Aus",
- Versand von Daten in die zusätzliche Karte "Sendet eingehenden Befehl in Karte 2",
- Empfang von Daten der zusätzlichen Karte "Sendet ausgehenden Befehl in Karte 2".

3. Verfahren nach Anspruch 1 oder 2, **dadurch gekennzeichnet**, dass die Kommunikation mit der zusätzlichen Karte (2) über das Terminal einen zusätzlichen Befehl umfasst, der vom Terminal an die Teilnehmeridentifikationskarte gemäss dem Protokoll derselben gesendet wird, wobei dieser Befehl lautet:
- Präsenz der zusätzlichen Karte "Karte 2 präsent".

4. Verfahren nach einem der vorhergehenden Ansprüche, **dadurch gekennzeichnet**, dass die Kommunikation mit der zusätzlichen Karte (2) über das Terminal von einem im in einem Programmspeicher der Teilnehmeridentifikationskarte gespeicherten Programm umgesetzt wird.

5. Verfahren nach einem der vorhergehenden Ansprüche, **dadurch gekennzeichnet**, dass die Teilbehmeridentifikations-Karte (1) geeignet ist, das Herunterladen über das Terminal in ihren eigenen Programmspeicher einer oder mehrerer der Umsetzung von Applikationen für die zusätzliche Karte (2) gewidmeter Programme zu steuern, wobei diese gewidmeten Programme von einem Applikationsladeserver kommen, der über die Terminals mittels des Telekommunikationsnetzes zugänglich ist.

6. Verfahren nach einem der vorhergehenden Ansprüche, **dadurch gekennzeichnet**, dass das Telefonnetz (60) das mobile Funktelefonnetz (GSM) ist, wobei die Terminals Funktelefone und die Teilnehmeridentifikationskarten SIM-Karten sind.

7. Verfahren nach einem der Ansprüche 1 bis 4,
**dadurch gekennzeichnet**, dass das Telefonnetz das telefonische Vermittlungsnetz oder das ISDN-Netz ist.

8. Telefon-Chipkarte für die Teilnehmeridentifikation, **dadurch gekennzeichnet**, dass sie Kommunikationsmittel mit einer zusätzlichen Karte (2) aufweist, die einer oder mehreren anderen Applikationen als der Telephonie gewidmet ist, über ein Telekommunikationsterminal (50), der mit mindestens zwei Interfaces für das Lesen von Chipkarten aufweist, eins für die Aufnahme der Teilnehmeridentifikations-Chipkarte für die Telephonie, das andere für die Aufnahme der zusätzlichen Chipkarte für eine oder mehrere andere Applikationen als die Telephonie, wobei diese Mittel einen Befehlssatz zur Steuerung der zusätzlichen Karte (2) umfassen, wobei diese Befehle durch die Teilnehmeridentifikationskarte gemäss dem Format (APDU) des Kommunikationsprotokolls der zusätzlichen Karte vorformatiert sind und vom Terminal gemäss dem Transportprotokoll desselben übertragen werden.

9. Telefon-Chipkarte für die Teilnehmeridentifikation nach Anspruch 8, **dadurch gekennzeichnet**, dass sie einen Programmspeicher mit einem Programm umfasst, das geeignet ist, um das Herunterladen eines oder mehrerer der Umsetzung von Applikationen für die zusätzliche Karte (2) gewidmeten Programmen über das Terminal (50) in diesen Speicher zu steuern, wobei diese Programme von einem Ladeserver (20) kommen, der den Terminals über das Telekommunikationsnetz (60) zugänglich ist.

10. Telefon-Chipkarte für die Teilnehmeridentifikation nach Anspruch 9, **dadurch gekennzeichnet**, dass die gewidmeten, in die Teilnehmeridentifikationskarte (1) heruntergeladenen Programme eine oder mehrere Applikationen für die zusätzliche Karte (2) enthalten, wobei diese Applikationen der Verwaltung des Mensch-/Maschinen-Interfaces mit dem Benutzer, der Verwaltung der Kommunikatiön mit der besagten zusätzlichen Karte und der Verwaltung der Kommunikation mit dem der zusätzlichen Karte zugeordneten Applikationsserver (30) entsprechen.

11. Telekommunikationsterminal für den Zugriff auf das Netz, das mindestens zwei Interfaces für das Lesen von Chipkarten aufweist, eins für die Aufnahme einer Teilnehmeridentifikations-Chipkarte (1) für die Telephonie, das andere für die Aufnahme einer zusätzlichen Chipkarte (2) für eine oder mehrere andere Applikationen als die Telephonie, **dadurch gekennzeichnet**, dass es die folgenden Mittel umfasst:
- Mittel für den Empfang der von der Teilnehmeridentifikationskarte gemäss dem Transportprotokoll des besagten Terminals gesendeten Befehle, um die zusätzliche Karte zu steuern, wobei die besagten Befehle von der Teilnehmeridentifikationskarte gemäss dem Format (APDU) des Kommunikationsprotokolls der zusätzlichen Karte vorformatiert werden,
- Mittel zur Übertragung unter diesen Befehlen der vorformatierten Befehle "sendet eingehenden/ausgehenden Befehl Karte 2" an die zusätzliche Karte,
- Mittel zur Ausführung unter diesen Befehlen der Befehle "Ein/Aus Karte 2",
- Mittel zum Senden eines Befehls "Karte 2 präsent" an die Teilnehmeridentifikationskarte.

12. Telekommunikationsterminal nach Anspruch 11, **dadurch gekennzeichnet**, dass die von der Teilnehmeridentifikations-Karte (1) gesendeten Befehle gemäss dem Transportprotokoll des Telekommunikationsterminals eingeschaltet sind, wobei das Terminal geeignet ist, um die so empfangenen vorformatierten Daten zu übernehmen, um sie an die zusätzliche Karte gemäss dem Protokoll derselben zu übertragen.

13. Telekommunikationsterminal nach Anspruch 10, **dadurch gekennzeichnet**, dass das Transportprotokoll zwischen dem Terminal und der Teilnehmeridentifikationskarte von der Norm GSM 11.14 definiert wird, und dass das Kommunikationsprotokoll mit der zusätzlichen Karte dem Format APDU (ISO 7816-4) folgt.

## Claims

1. A method for making transactions through a telecommunication network (60) by means of smart cards (1, 2) and telecommunication terminals (50) for access to the network provided with at least two smart card reading interfaces, one for receiving a subscriber identification smart card (1) dedicated to telephony, the other for receiving an additional smart card (2) dedicated to one or more applications other than telephony; **characterised in that** the subscriber identification smart card communicates with the additional card via the terminal, by means of a set of commands intended to control the said additional card, these commands being preformatted by the subscriber identification card according to the format of the communication protocol of the additional card and transmitted by the terminal according to the transportation protocol of the latter.

2. A method for making transactions according to Claim 1, **characterised in that** the set of commands includes at least the following commands:
- energising of the additional card "switch on card 2",
- de-energising of the additional card "switch off card 2",
- sending of data in additional card "Send incoming command in card 2",
- reception of data from the additional card "Send outgoing command in card 2".

3. A method according to Claim 1 or 2, **characterised in that** the. communication with the additional card (2) via the terminal includes an additional command sent by the terminal to the subscriber identification card according to the communication protocol thereof, this command being:
- presence of the additional card "card 2 present".

4. A method according to any one of the preceding claims, **characterised in that** the communication via the additional card (2) via the terminal is implemented by a program loaded into a program memory of the subscriber identification card.

5. A method according to any one of the preceding claims, **characterised in that** the subscriber identification card (1) is able to control the downloading through the terminal, in its own program memory, of one or more programs dedicated to the use of applications for the additional card (2), these dedicated programs coming from an application downloading server accessible through the terminals by means of the telecommunication network.

6. A method according to any one of the preceding claims, **characterised in that** the telephone network (60) is the mobile radio telephony network (GSM), the terminals being radio telephones and the subscriber identification cards being SIM cards.

7. A method according to any one of Claims 1 to 4, **characterised in that** the telephone network is the switched telephony network or the integrated services digital network (ISDN).

8. A subscriber identification telephone smart card, **characterised in that** it has means of communication with an additional card (2) dedicated to one or more applications other than telephony, via a telecommunication terminal (50) provided with at least two interfaces for reading smart cards, one for receiving the subscriber identification smart card dedicated to telephony and the other for receiving the additional smart card, these means comprising a set of commands intended to control the additional card (2), the said commands being preformatted by the subscriber identification card according to the format (APDU) of the communication protocol of the additional card and transmitted by the terminal according to the transportation protocol of the latter.

9. A subscriber identification telephone smart card according to Claim 8, **characterised in that** it has a program memory containing a program adapted to control the downloading through the terminal (50), into this memory, of one or more programs dedicated to the use of applications for the additional card (2), these programs coming from a downloading server (20), accessible through the terminals by means of the telecommunication network (60).

10. A subscriber identification telephone smart card according to Claim 9, **characterised in that** the dedicated programs downloaded into the subscriber identification card (1) include one or more applications for the additional card (2), these applications corresponding to the management of the man-machine interface with the user, the management of the communication with the said additional card and the management of the communication with the application server (30) related to the additional card.

11. A telecommunication terminal for access to the network provided with at least two smart card reading interfaces, one for receiving a subscriber identification smart card (1) dedicated to telephony, the other for receiving an additional smart card (2) dedicated to one or more applications other than telephony, **characterised in that** it has:
- means adapted for receiving commands issued by the subscriber identification card according to the transportation protocol of the said terminal and intended to control the additional card, the said commands being preformatted by the subscriber identification card according to the format (APDU) of the communication protocol of the additional card,
- means for transmitting, amongst these commands, the commands "send incoming/outgoing command card 2" to the additional card as preformatted,
- means for executing, amongst these commands, the commands "switch card to on/off",
- means for issuing a command "card 2 present" to the subscriber identification card.

12. A telecommunication terminal according to Claim 11, **characterised in that** the commands issued by the subscriber identification card (1) are encapsulated according to the transportation protocol of the telecommunication terminal, the terminal being able to recover the preformatted data thus received in order to transmit them to the additional card according to its communication protocol.

13. A telephony terminal according to Claim 10, **characterised in that** the transportation protocol between the terminal and the subscriber identification card is defined by GSM standard 11.14 and in that the communication protocol with the additional card follows the APDU format (ISO 7816-4).
